# EUROPEAN PATENT APPLICATION

(11) **EP 2 730 946 A1**
(43) Date of publication of application: **14.05.2014**
(21) Application number: 12425181.0
(22) Date of filing: 13.11.2012
(51) Int. Cl.: G01S 17/02

(54) **Detection apparatus and method to detect obstacles to navigation in waterways**

(30) Priority: 07.11.2012 IT UD20120187
(71) Applicant: Eidon Lab S.C.A.R.L., 35129 Padova (IT)
(72) Inventor: Bortolussi, Gian Luigi, 34143 Trieste (IT)
(74) Representative: Petraz, Gilberto Luigi

(57) **Abstract**

Detection apparatus and method to detect obstacles (21) to navigation on waterways, comprising a light emitter (12) configured to emit a beam of collimated light (13) and a video camera associated to the light emitter (12).

## Description

### FIELD OF THE INVENTION

The present invention concerns an apparatus and a corresponding method, collectively defined system, of detection (Semi Submerged Object Detector, or SSOD), which is particularly applied in the nautical field in a broad sense, to prevent and avoid collisions with any obstacle to navigation on waterways, such as for example objects, or bodies, floating on the surface of the water, half-submerged, immersed at several meters, or emerging from the water, shallows, sand bars or rocks. By navigation on waterways we mean any type of navigation, be it marine, lake, lagoon, river, merchant, cruises, commercial, large or small coastal navigation, recreational, sailing, motor or other means of propulsion. In fact both the apparatus and the method according to the present invention are suitable to be installed in any type of craft of any tonnage, to detect, either by day or night, any obstacle to navigation, even of small sizes. By craft we mean any means capable of navigation, irrespective of its size or its tonnage, be it a ship, a boat or any other type of craft.

### BACKGROUND OF THE INVENTION

In the field of navigation on waterways the problem of detecting obstacles present along the route, whether they be objects or bodies, floating, half-submerged, or emerging from the water, shallows, sand bars, rocks and other, is a considerable one for boat builders and users of boats, because accidents are ever more frequent, even causing boats to sink, due to the impact with such obstacle, which are difficult to see or detect.

In particular, in the last few years, there have been numerous collisions with containers, left behind or lost by ships which transport them. In this case, the danger is due to the large mass of each container, in the order of several tons, to its robustness and to the long time it floats, sometimes caused by the material packed inside.

Another dangerous element for marine navigation, with the danger of collision, is the presence in the sea of large marine mammals, which although they are not actually floating objects, can resemble them in that they can be dangerous along the route, whether it is short or long. Moreover, as well as the possible danger of the craft sinking, the impact of the craft with a cetacean is not a secondary cause of the cetacean's death.

Until today it has been practically impossible to visibly detect, and in time, an object which is half-submerged, floating or emerging from the water, because of the physical limits of the instrumentation commonly used, that is, radar and sonar.

It is also known that most accidents, that is collisions, with floating objects happen during the day, in conditions of a calm sea and excellent visibility. In fact, some of these events are caused by distraction, that is, human error, and this distraction is often at its worst precisely in the best weather conditions, when the craft is often guided by the automatic pilot and, as a consequence, there is no direct surveillance by the helmsman.

Even today the state of the art does not have satisfactory solutions to prevent collisions at sea with obstacles to navigation, floating, half-submerged or emerging from the water.

In fact, radar is suitable to detect objects which are well above the surface of the water, such as other boats, wharfs, jetties, piers, etc. The advantage of radar is that it is possible to detect said obstacles even in the worst visibility conditions. The limit of radar is that water is conductive; conductive materials make up a screen impenetrable to the radio waves, therefore an object on the surface of the water will not be visible to radar.

Sonar, on the other hand, is a sensor based on a physical principle which is different from radar. Sonar emits beams of ultrasonic waves and measures the reflection echoes of the bottom in front of the craft, or of objects completely immersed in the water. Its typical use is to "look" under the surface of the water. Sonar systems are not known for the detection of floating, half-submerged objects at the distances we are interested in, that is, from a few some hundred meters to some kilometers.

Devices are also known to detect obstacles to navigation which are based on infrared or thermal video cameras, which allow to identify the objects based on the difference in temperature with respect to the surrounding water. Moreover, these known devices also function as night vision devices. None of the known devices has proved adequate to recognize and signal the presence of containers lost in the water. Moreover, the use of infrared video cameras has the following disadvantages and application limits:
- it is plausible that a half-submerged container, continuously washed by the waves, is practically isothermal with the sea and therefore does not give any contrast in the infrared image;
- there may be currents or streaks of water on the surface of the sea with different temperatures which would give false echoes.

A system for the detection of mines in the sea is also known, which is based on the localization of a determinate spherical shape with sizes in the order of 30 cm. However this known system has the disadvantage that it cannot take into account the reflection of the sky on the surface of the sea, which, in practice, is the reason why until today half-submerged objects have been practically invisible.

One purpose of the present invention is to obtain an apparatus and a method which guarantee to identify, quickly, with precision and reliability, any obstacle to navigation on waterways.

Another purpose of the present invention is to obtain an apparatus and a method which not only allow to display the presence of the obstacle, but also automatically signals the distance from the craft and the danger for navigation.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

The new and original technical solution, which achieves said purposes and offers surprising and unforeseeable advantages, both in technical terms and in economic terms in lowering costs, provides to make an apparatus and perfect a method to detect obstacles to navigation on waterways, based on the use of a ray or beam of collimated light, for example, advantageously but not exclusively, an expanded laser beam, and therefore a physical principle completely different from radar or sonar, or video cameras alone, either normal or infrared.

In accordance with one feature of the present invention, the detection apparatus and method according to the present invention provide to use opto-electronic means configured and suitable to automatically detect the presence of half-submerged objects at a detection distance sufficient to avoid collision. This distance can be estimated at about 200 meters and more for small boats, up to several kilometers, for example from 1 to 3 for big ships. The opto-electronic means are able to generate an image of the surface of the water, in which image the objects to be detected are taken to a level of contrast with respect to the surface of the water such that, by means of processing based on the principles of artificial vision, these can be identified with great reliability and relative ease.

The detection apparatus and method according to the present invention allow to obtain a contrast between obstacle and background (reflection of the light from the sky on the surface of the water) by means of suitable lighting means. The contrast is indispensable for the automatic segmentation or separation of the obstacle, for example a half-submerged object, from the context, in this case reflection of the light from the sky on the water, using image processing.

In fact, given the limits of the state of the art, the Applicant believes that the technology of artificial vision is the most promising and feasible to achieve the anti-collision system (apparatus and method) according to the present invention, getting around the known limits of sonar and radar.

Compared to a traditional set-up, typical of industrial plants, the detection system according to the present invention has been designed in a completely new and original way, to be able to operate in an open environment. Nevertheless, some aspects of the technology of industrial vision have been partly reproduced in order to reach that deterministic and reliable functioning typical of industrial applications.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral and schematic view of a detection apparatus according to the present invention mounted on a craft;
- fig. 2 is a schematic and enlarged view of a detail of the apparatus in fig. 1;
- fig. 3 is a schematic view from above of a light beam produced by the light source of the apparatus in fig. 1;
- fig. 4 is a graph that shows the work band of the light source of the apparatus in fig. 1 and of an NPB filter;
- fig. 5 is a graph that shows the optimal work band of the light source of the apparatus in fig. 1 and of an NPB filter;
- fig. 6 is a graph which shows the solar radiance at the level of the water in relation to the light source of the apparatus in fig. 1 and of an NPB filter;

### DESCRIPTION OF ONE FORM OF EMBODIMENT OF THE PRESENT INVENTION

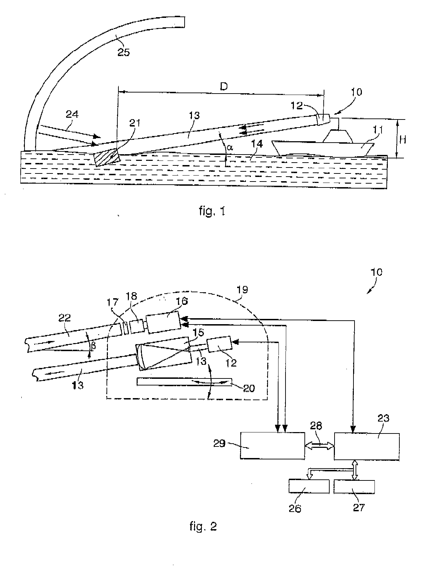

With reference to figs. 1 and 2, a detection apparatus 10 according to the present invention is shown assembled on a craft 11.

The detection apparatus 10 comprises a light source, or light emitter 12, advantageously of the laser type with impulses, configured to generate a beam of collimated light 13 at a determinate wave length, advantageously in the range from 380 nm (nanometers) to 540 nm.

Given this last parameter, the beam of collimated light 13 is also able to spread in the water, the sea for example, indicated by the reference number 14 in fig. 1, even below the surface of the water, for several meters, from 1 (cloudy water) to 5m (clear water), depending on its turbidity.

The beam of collimated light 13 emitted by the light emitter 12 is first expanded by a ray expansion device 15 (fig. 2) associated to it, which advantageously shapes it into the form of a luminous line with an aperture substantially parallel to the line of the horizon, inclined by an angle α of a few degrees, advantageously in the range from 3° to 8°. In fig. 1, which is a schematization of the detection apparatus 10, the angle α is shown with a much bigger amplitude than the actual one cited above.

The detection apparatus 10 also comprises a video camera 16, of the high sensitivity and high speed type, known and available on the market.

It is however recommended that the video camera 16 should have the following technical requisites:
- low synchronization error: ideally the error should be less than <100 ns (nanoseconds): a precise synchronization of acquisition with the return impulse is fundamental to be able to acquire the return impulse using reduced exposition times;
- possibility of having reduced exposition times, equal to or better less than 1 s (microsecond): this feature serves to acquire the least possible quantity of light from the sky so as to obtain the maximum signal/noise ratio;
- spectral band: all the visible band, better if with good performance in the blue violet part (infrared is not needed) in accordance with the band suitable for the optimal functioning of its sensor;
- sensor format: 1/2" or more: a larger surface of the sensor causes a greater quantity of light to be collected, which is indispensable to obtain a sufficient signal and advantageously avoid using costly components such as light intensifiers;
- VGA resolution or greater: this is a not particularly high resolution suitable to obtain great sensitivity: big pixels = more sensitivity;
- binning: this is the characteristic of grouping pixels by adjacent rows and columns to form bigger sized pixels and therefore with greater sensitivity and less noise. This feature is very advantageous to take a video camera with a much bigger VGA resolution and with a very big format for the sensor to a low resolution and high resolution;
- medium/high frame rate: advantageously particularly high acquisition frequencies (100 FPS, Frame Per Second) or more entail a higher overlapping of the surface areas of the sea 14 consecutively acquired, thus improving the reliability of the system.

It is also recommended that the video camera 16 has the following further technical requisites:
- partialization: it is advantageous if it allows to obtain a high frame rate from commercial models, reducing the number of lines acquired to adapt the very narrow shape of the scanning area. This characteristic is commonly available in almost all commercial digital video cameras;
- high dynamics: it needs to have an image depth of 12 or even better 16 bits. This characteristic, available in a lot of commercial digital video cameras is useful to be able to acquire and process images with a high dynamic, that is, with high contrast (presence of light and dark zones at the same time);

- sensor technology: the Back-illuminated CCD sensors are better than the common CCDs because they have a high QE (Quantum Efficiency); this technology improves the noise/signal ratio of the sensor even by 100%, but at a very high cost;
- dual frame: this characteristic allows to obtain very close acquisitions, with a time distance of 1 microsecond or less, therefore much closer than the period between successive frames; this characteristic is not commonly available in commercial digital video cameras. If it is available, this characteristic is very advantageous because it allows to carry out differential analyses between images acquired with and without light impulse, above all if at high dynamics. The processing in this case would be very simplified.

A Narrow Bandpass Filter (NBP) 17 is associated to the video camera 16, and also a lens 18 of the C-mount type with high luminosity, which will be described in more detail hereafter.

The light emitter 12 with the associated ray expansion device 15, the video camera 16 with the filter 17 and the lens 18 are mounted inside a sealed container 19 by means of a gyrostabilized platform 20 of the known type.

If the beam of collimated light 13 exiting from the ray expansion device 15 hits an obstacle 21 (fig. 1), for example a half-submerged object, or shallows or a cetacean, or any other object in proximity to the surface in the frame, a light echo 22 is generated.

The light echo 22 is advantageously filtered by the filter 17 centered in the band of the light emitter 12. In this way almost all, that is, at least from 70% to 90% of the light echo 22 produced by the obstacle 21 reaches the sensor of the video camera 16, while all the portion of daylight outside the narrow band of the filter, which is estimated as at least 98%, is rejected.

Another selectivity with respect to the daylight from the sky is obtained by acquiring the image with the video camera 16, only in the time window corresponding to the return light echo 22. This acquisition range of the image is delayed, with respect to the emission of the light impulse of the light emitter 12, of the outward-and-return time of the light impulse which depends on the distance of the section of the sea analyzed by the detection apparatus 10.

To give an example, if the work distance of the detection apparatus 10 from the obstacle 12 is equal to 600 meters, the delay is about 4 s (microseconds), that is, the time taken by the light to travel 1.200 m, that is the sum between the outward travel and return travel.

The lens 18 of the video camera 16 is a high luminosity one (for example F/D=1 or better) in order to collect the weak light echo 22 of the floating object. At a distance of 600 meters the aperture of the lens of the video camera 16 equals a shot in the range from 32m to 84m. Such a shot is congruent with the purposes of the present invention in that it allows to obtain a "video" enlargement in the order of 10x, which produces sharp images of the marine field which will be crossed by the craft 11.

The enlargement is comparable to that produced by binoculars and allows to have a good perception of the obstacles 21 which with the naked eye would be below the visibility threshold.

In practice the angular field framed does not change depending on the distance framed, so that the video camera 16 and the associated lens 18 can be used to detect obstacles 21 at distances even in the order of several km.

The video camera 16 is positioned at the side of the light emitter 12 and is provided with a traditional CCD sensor, and not therefore IR; it transforms the light echo 22 into a digital image which is sent to a processing unit 23.

The processing unit 23 can be a computer of any type, even a laptop, better if it has features suitable to the nautical environment and the possibility of integrating at least three cards on the internal slots and equipped with software or a card with a processor and embedded software.

The processing unit 23 is configured to identify and highlight the anomalies corresponding to the floating obstacle 21 or obstacles 21, to reconstruct the image of the sea 14 in front of the craft 11 in the form of a reconstructed image (synoptic), displayed in an interface, for example a monitor of the known type and not shown in the drawings.

The software to identify the obstacles 21 is based on an adaptive filtering algorithm which adapts to the light 24 of the sky 25, schematized in fig. 1, and to the average response of the sea 14 to the detection apparatus 10 in terms of background signal in the particular environmental condition in which the craft 11 is, that is, environmental light, direction, wave condition of the sea, weather conditions etc.

The light 24 constitutes the reflection of the sky 25 on the water of the sea 14, as seen from the craft 11.

The alterations in the background are identified by means of a suitable convolution algorithm. Such alterations are always shown in a synoptic video 26 in the interface of the detection apparatus 10.

The alterations in the image processed are measured and, if bigger than a series of adjustable threshold parameters, regarding both intensity and sizes, are classified as a dangerous floating object and generate an alarm, also acoustic, by means of a signaling device 27 available at the DATA OUT interface, which can be of various type, according to the application and the technical characteristics of the data interface of the system which receives them.

Moreover, the processing unit 23 is connected by means of a command and programming channel 28 to a synchronization unit 29, which in turn is connected to the light emitter 12 and the video camera 16.

The processing unit 23 can receive further data concerning the position, speed and route of the craft 11 through any DATA IN entrance, of any known type and so not shown in the drawings.

The processing unit 23 can also optionally, generate a maximum alert signal in the case of a foreseen collision, which can be transmitted through the DATA OUT interface to the signaling device 27.

The processing unit 23 is configured and programmed to carry out at least the following functions:
- managing and commanding the synchronization unit 29: it is in fact fundamental for the correct functioning of the detection apparatus 10 that the generation of the light impulses by the light emitter 12 and the acquisition of the images by the video camera 16 are perfectly synchronized with each other;
- interfacing with the devices: if for the operator it is a detection apparatus which has no need of any command, on a technical level all the programming interfaces and set ups of the various devices and components which make up the detection device 10 have been made available;
- remote communication: the processing unit 23, as well as the video interface, can be accessed from a remote site (for example for updating the software of the detection apparatus 10 and/or the different firmwares of the various devices which make up the detection apparatus 10 itself;
- external entrance devices: for example, but not only, the GPS navigation system to trace the scanning of the detection apparatus 10 to a precise geographical position;
- DATA OUT interface: in the event of danger of collision, an alarm signal is generated by means of an I/O card; the signals available to the DATA OUT interface are the following: warning, serious alarm, optical warning signal, acoustic warning signal. Alarms are also generated in the event of malfunctioning of a device or of an out-of-order device:
- acquisition of the image: this function is performed by the acquisition card (frame grabber) inserted in one of the slots of the calculator;
- image processing: this function is an important part of the detection apparatus 10 and is described hereafter.

The processing unit 23 is also able to communicate the state of danger to laptop devices inside the craft 11, such as mobile phones, smart phones, PC tablets, or other devices provided with Wifi network, Bluetooth, GSM, UMTS.

It is also provided that the processing unit 23 is provided with or combined with a hardware/software device which allows to store the video input in order to identify the causes of sea accidents, so as to define strategies for prevention and safety.

In twilight or night time conditions, it is much easier to obtain the sufficient illumination condition of the obstacle 21 (signal/noise ratio suitable for detection) due to the reduced intensity of the luminosity of the sky.

For sizing the light emitter 12 it was taken into account that the solar radiance on the ground in optimal conditions reaches 1000 W/m² and that the luminosity of the sky given by the diffused component due to Rayleigh scattering (but also other diffusive effects) determines a radiance component at ground level in the order of 200 W/m². This luminous flow (diffused component) may be held, arbitrarily, to come distributed in a uniform manner from the whole celestial hemisphere. The luminous flow coming from the segment of sky intercepted by the solid angle of visual framing of the detection apparatus 10 will advantageously be so much smaller as the solid angle of framing is smaller. Advantageously, a greater luminous intensity will be obtained from the light emitter 12, conveying the whole beam of collimated light 13 generated by it to the solid angle of framing; advantageously the beam of collimated light 13 will be so much more intense as the solid angle of framing is limited.

In the open sea it is unthinkable to work inside the classical "box", as happens in the industrial field, where an illumination outside the visible spectrum, either IR or UV, is used, combined with a bandpass filter, in the same band as the light sources and put before the lens of a video camera, so that only the fraction of environmental light in the same band as the light sources can reach the sensor of the video camera.

The combination of the light emitter 12 and the NPB filter 17 reaches maximum efficiency when monochromatic sources are used, such as, for example but not only, lasers.

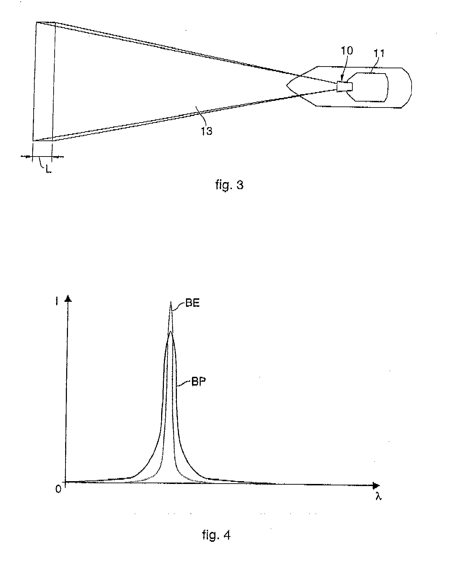

In the detection apparatus 10, the illumination is practically monochromatic and an NBP filter 17 can be used with a band width of a few nanometers, centered on the frequency of the laser light emitter 12, as shown in the graph in fig. 4, where a continuous line shows the bandpass BP of the filter 17, and a discontinuous line shows the emission band BE of the light emitter 12.

Using the monochromatic light emitter 12 and the NBP filter 17 with a band width between 1 nm and 5 nm it was possible to soften the intensity of the daylight reflected on the sea by 2 to 3 orders of size.

The spectrum band of the light emitter 12 is such as to penetrate the water of the sea 14 in the best possible way, so as to be able to reach even submerged obstacles 21 and to have a response reflection from them.

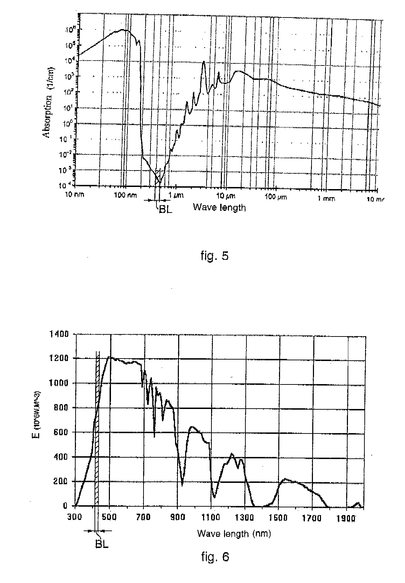

As previously specified, the most suitable and advantageous wavelengths of the light emitter 12 are in the working band BL comprised in the range between 380 nm and 540 nm, that is, from the near UV to green-blue, shown by the zone of dashes in the graph in fig. 5.

Within said range, the choice of the specific wavelength will be a compromise between the frequencies of maximum transparency of the sea water, the frequencies of least solar radiance, market availability of the light sources and their costs.

The fraction of daylight that will be able to reach the sensor of the video camera 16 (fig. 2) is greatly limited by the NPB filter 17, as shown in fig. 6, which schematically shows the solar radiance at the level of the sea 14, with the working band BL shown by a zone of dashes.

With regard to the light emitter 12, it is advantageous to use a pulsed light source to obtain a greater insulation from environmental light. The most suitable technology is that of the Q-switch lasers. Such light sources have an average power of just a few watts, but they are able to generate impulses of extremely short duration with powers that reach the order of hundreds of kW. For example an impulse of 2 mJ (millijoules) emitted in 20 ns (nanoseconds) has a power of 100 kW.

Using this type of light emitter 12 has the following advantages:
- acquiring the image of the surface of the water 14 with a video camera 16, exposing the sensor of the latter for the very short period of time of the duration of the light echo 22, or light impulse, we obtain a favorable ratio between the intensity of the light emitter 12 (some hundred kW) and the intensity of the environmental light;
- synchronizing the acquisition of the image with the return light echo 22 we avoid acquiring the scattering of the outward beam of collimated light 13. The image of the outward beam of collimated light 13 can be considered as a disturbance, which in the event of mist would completely mask the return impulse, that is, the light echo 22.

The structuring of the beam of collimated light 13 is obtained by the ray expansion device 15. Unlike state-of-the-art devices, which each generate a cylindrical collimated beam, the ray expansion device 15 has the following particular characteristics:
- it expands the section of the beam of collimated light 13, so that its expansion is such as to reduce to a minimum the danger of the beam of collimated light 13 itself at the exit section of the ray expansion device 15. For safety reasons it is better that, in terms of continuous power, the intensity of the beam of collimated light 13 does not exceed 1000 W/m², preferably a value considerably lower, that is, comprised between 1 W/m² and 100 W/m²;
- it structures the beam of collimated light 13 so that one or more optical lighting lines are generated, similarly to what happens with line generator lasers. In this way the power of the light emitter 12 is distributed over a smaller surface compared to a homogeneous emission within a solid angle having a circular section.

The luminous line of the beam of collimated light 13 advantageously has the following dimensional characteristics:
- aperture of the beam of collimated light 13 parallel to the line of the horizon: from 10% to 20% greater than the framing angle β (fig. 2) of the video camera 16, which is comprised between 0.4° and 0.8° (in fig. 2, which is a schematization of the detection apparatus 10, the angle β is shown with a much bigger amplitude than the actual one cited above);
- the thickness of the beam of collimated light 13 orthogonal to the line of the horizon is such as to obtain a width L (fig. 3) of the luminous line, and hence of the portion of sea illuminated, comprised between 10 m and 30 m;
- it is angled with respect to the horizon by said angle α, (fig. 1), such that the detection distance D between the detection apparatus 10 and the obstacle 21 is near the value of the empirical formula D = Hx120 where H represents the height (referred to the surface of the sea) at which the detection apparatus 10 is installed.

Advantageously it is better to install the detection apparatus 10 at the maximum height H available on the craft 11, to obtain the maximum forewarning in the event of a danger of collision. For example, for a big yacht the height H is about 5 meters and the working distance can thus be about 600 meters, a sufficient value to have a forewarning of about one minute at the cruising speed of 20 knots.

According to a variant, for structuring the beam of collimated light 13, instead of the high-luminosity C-mount type lens 18 described above, any line-generating lens found on the market can be used, suitably sized or, alternatively, a cylindrical and/or bi-cylindrical lens in combination to obtain the shaping of the beam of collimated light as described above.

The gyrostabilized platform 20 is important to guarantee the pointing of the detection apparatus 10 and in particular of the light emitter 12 and the associated video camera 16, toward a section of the surface of the sea 14 with the same position in front of the craft 11. Therefore, the light emitter 12 and the video camera 16, held solid with respect to each other, must be disposed on the gyrostabilized platform 20, of the horizontally pivoting type, so that the latter maintains the framing region fixed, compensating the angles of pitching and rolling of the craft 11.

The synchronization unit 29 is configured to generate the impulses that command the luminous emission by the light emitter 12 and the delay in acquisition of the images by the video camera 16. The delay in acquisition is advantageously programmable to adapt to the outward-and-return travel time of the beam of collimated light 13. Physically the synchronization unit 29 is advantageously made by a hardware card integrated into the processing unit 23.

The acquisition of the image by the video camera 16 is suitably commanded with a certain advance so as to have the certainty of acquiring the zone illuminated by the light impulse. Advantageously, the synchronization unit 29 can be made with a device (acquisition card) that transfers the images from the video camera 16 to a processing memory of the processing unit 23.

The processing algorithms were made using the C# language and Microsoft development environment .Net, based on the OOP (Object Oriented Programming) paradigm.

Alternatively, some parts can be made in C/C++, for example when no .Net drivers are available for some devices of the detection apparatus 10.

All the images acquired have in common the fact that they are monochromatic, indeed there is no advantage in using color video cameras 16 in combination with monochromatic light sources.

The software for identifying the obstacles 21 implements a set of image processing heuristics to adapt to the possible visibility conditions of the obstacle 21 and hence the possible acquisition modes. The acquisition modes used are as follows:
- acquisition only with the light emitter 12 synchronized; this is the default condition for night sailing;
- acquisition with the light emitter 12 synchronized and without any light source; in fact it is plausible that in some conditions the video camera 16 might identify a floating obstacle 21 thanks to environmental lighting only;
- acquisition in dual frame mode, with and without light source; if available on video camera 16 level, this mode allows to effect a differential analysis of the image, with a considerable increase in performance both in terms of sensitivity and in terms of reliability;
- acquisition without light source: this condition could be dictated by safety regulations that prevent the use of pulsed laser sources within a certain distance of the coast, to prevent accidents caused by dazzling, or because the craft is sailing directly toward the sun and in this case the light source could be useless.

The modes that entail a double acquisition automatically also manage the acquisition parameters since it is rather unlikely that the images with and without light source can be acquired with the same set of parameters.

Obviously, switching among the modes described above cannot be left to an operator, but is automatic and based on a decision algorithm that uses the following information as input:
- local time (GPS)
- local position (GPS)
- visibility and sea conditions (by processing images detected by the video camera 16)
- direction of navigation (GPS)
- speed of the craft 11 (GPS, on board instrumentation)

Each image, irrespective of how it is acquired by the video camera 16, must be processed to identify the presence of possible obstacles 21 to navigation. The surface of the sea 14 is not a static object, but extremely variable both in terms of roughness due to the wave motion and also in terms of brightness due to the reflection as described above of the light 24 of the sky 25. Furthermore, each obstacle 21 may appear, depending on the acquisition mode, lighter or darker than the background given by the surface of the sea 14.

The images acquired in combination with any obstacle 21, including a low sandbank (foreground), must appear lighter than the context (background). For this reason the processing software of the detection apparatus 10 is based on the adaptive filtering algorithm as described above, which adapts both to the light of the sky and also to the average response of the sea to the light emitter integrated into the detection apparatus 10. In practice the adaptive filtering algorithm, which functions as a filter, continuously defines the background of the image in terms of background signal in the determinate environmental condition that the craft 11 is in (for example environmental light, direction, sea condition, weather, etc.).

The alterations in this background represent possible obstacles to navigation: they are identified by the convolution algorithm described above; the convolution parameters can also be found by means of an adaptive heuristic.

Alternatively, it is possible to define optimum convolution masks, suitable for particular circumstances. Each alteration is always shown in the synoptic video in the interface of the detection apparatus 10.

The alterations in the image processed are measured and, if greater than a series of adjustable threshold parameters, concerning both intensity and sizes, are classified as a dangerous obstacle 21 and generate an alarm, also acoustic, available to the DATA OUT interface.

A particularly close examination is also made for the case record of sandbanks where there is a gradual passage from adequate depth to shallows, without a discontinuity of the dangerous obstacle type being detected. In this case it is necessary to monitor the development of the background, in the images acquired with the video camera 16, in terms of absolute threshold, correlated both to the luminosity of the sky (direction, time, position) and also to the sailing parameters (speed).

Therefore, in short, the detection method according to the present invention, to detect obstacles 21 to navigation on waterways, for example using the detection apparatus 10, comprises a step of emitting the beam of collimated light 13 which is advantageously a laser beam and even more advantageously a pulsed laser beam.

The detection method also comprises a detection step, in which opto-electronic means, which comprise at least the video camera 16, automatically detect the presence of the obstacles 21, whether they are floating, half-submerged or immersed up to a few meters, at the detection distance D sufficient to prevent a collision.

The detection method also comprises a generation step, in which the opto-electronic means, which also include the NBP filter 17, the lens 18, the processing unit 23 and the synchronization unit 29, generate an image of the surface of the sea 14 and in which the obstacles 21 detected by the video camera 16 are taken to a level of contrast with respect to the surface of the sea 14 such that the obstacles 21 are identified by processing, by the processing unit 23, based on the principle of artificial vision.

The detection method also comprises a determination step, in which the opto-electronic means obtain a determinate contrast between each of the obstacles 21 and a background, which comprises the surface of the sea 14, by means of the beam of collimated light 13, which contrast is necessary for the automatic segmentation or separation of each of the obstacles 21 from the background by means of image processing.

The detection apparatus 10 and the corresponding method according to the present invention allow to obtain at least the following advantages:
- the possibility of detecting, sufficiently in advance, the presence of obstacles to navigation on waterways, whether floating, half-submerged, emerging from the water, or at low depth, for example but not exclusively: containers lost at sea, large cetaceans, shallows, etc:, in every light condition both day and night, and to generate an alarm, automatically and in good time, when a condition of danger is detected;
- the possibility of detecting obstacles to navigation on waterways, isotherms with the surface of the sea and hence not detectable with known devices, such as for example radar, sonar, IR video cameras;
- the possibility of obtaining a synoptic video, visible in the graphical interface of the processing unit 23, which shows the map of the sea 14 in front of the craft 11 and signals the position of possible obstacles 21 floating, half-submerged, emerging from the water, or at low depth, such as shallows, large marine mammals and whatever can be detected by the video camera 16, in every light condition both day and night, also in the absence of environmental light, which allows safe sailing also at night;
- the possibility of preventing collisions with large marine mammals, to safeguard the conservation of protected species;
- the possibility of structuring the beam of collimated light 13 with a ray expansion device, able to convey with the greatest optical performance said beam of collimated light 13 within the solid angle of the framing, also obtaining a highly uniform illumination;
- the possibility of synchronizing the emission of the light impulses by the light emitter 12 with the acquisition only of the return light echo 22 with an accuracy of a nanosecond, based on the suitably programmed image acquisition card;
- acquisition of images by the video camera 16 with exposure times on a scale comprised between 50 ns (nanoseconds) and 1 µs (microsecond);
- a software function for processing the image by differential processing of the images acquired at a time distance on the scale of µs (microseconds) which exploits the dual frame acquisition technique of the video camera 16.

It is clear that modifications and/or additions of parts or steps may be made to the detection apparatus and method as described heretofore, without departing from the field and scope of the present invention.

It is also clear that, although the present invention has been described with reference to a specific example, a person of skill in the art shall certainly be able to achieve many other equivalent forms of detection apparatus and method, having the characteristics as set forth in the claims and hence all coming within the field of protection defined thereby.

## Claims

1. Detection apparatus to detect obstacles (21) to navigation on waterways, **characterized in that** it comprises a light emitter (12) configured to emit a beam of collimated light (13).

2. Detection apparatus as in claim 1, **characterized in that** said beam of collimated light (13) is a laser beam.

3. Detection apparatus as in claim 2, **characterized in that** said laser beam is pulsed.

4. Detection apparatus as in any claim hereinbefore, **characterized in that** said beam of collimated light (13) has a determinate wavelength, advantageously in the range of from 380 nm to 540 nm.

5. Detection apparatus as in any claim hereinbefore, **characterized in that** it also comprises opto-electronic means (16, 17, 18, 23, 29) configured to automatically detect the presence of said obstacles (21), whether they are floating, half-submerged or immersed up to several meters, at a detection distance (D) sufficient to prevent a collision.

6. Detection apparatus as in claim 5, **characterized in that** said opto-electronic means (16, 17, 18, 23, 29) comprise a video camera (16) and are configured to generate an image of the surface of the water (14) in which said obstacles (21) are taken to a level of contrast with respect to said surface of the water (14) such that said obstacles (21) are identified by means of processing, by a processing unit (23), based on the principles of artificial vision.

7. Detection apparatus as in claim 5 or 6, **characterized in that** said opto-electronic means (16, 17, 18, 23, 29) are also configured to obtain a determinate contrast between each of said obstacles (21) and a background, which comprises the surface of the water (14), by means of said beam of collimated light (13), said contrast being necessary for the automatic segmentation or separation of each of said obstacles (21) from said background by means of image processing.

8. Detection method to detect obstacles (21) to navigation on waterways, **characterized in that** it comprises a step of emitting a beam of collimated light (13).

9. Detection method as in claim 8, **characterized in that** said beam of collimated light (13) is a laser beam.

10. Detection method as in claim 9, **characterized in that** said laser beam is pulsed.

11. Detection method as in claim 8, 9 or 10, **characterized in that** it comprises a detection step, in which opto-electronic means (16, 17, 18, 23, 29), comprising a video camera (16), automatically detect the presence of said obstacles (21), whether they are floating, half-submerged or immersed up to several meters, at a detection distance (D) suitable to prevent a collision.

12. Detection method as in claim 9 or 10, **characterized in that** it also comprises a generation step, in which said opto-electronic means (16, 17, 18, 23, 29) generate an image of the surface of the water (14) and in which said obstacles (21) detected by said video camera (16) are taken to a level of contrast with respect to said surface of the water (14) such that said obstacles (21) are identified by means of processing, by a processing unit (23), based on the principles of artificial vision.

13. Detection method as in any claim from 8 to 12, **characterized in that** it also comprises a determination step, in which said opto-electronic means (16, 17, 18, 23, 29) obtain a determinate contrast between each of said obstacles (21) and a background, which comprises the surface of the water (14), by means of said beam of collimated light (13), said contrast being necessary for the automatic segmentation or separation of each of said obstacles (21) from said background by means of image processing.
